Europäisches Patentamt

European Patent Office

Office européen des brevets

(11) Publication number: **0 164 012**
**B1**

# EUROPEAN PATENT SPECIFICATION

(45) Date of publication of patent specification: 23.08.89

(51) Int. Cl.⁴: **G 06 K 7/10**

(21) Application number: **85106195.2**

(22) Date of filing: **21.05.85**

(54) Apparatus and method for reading a two-dimensional bar code.

(30) Priority: **04.06.84 US 616822**

(43) Date of publication of application:
**11.12.85 Bulletin 85/50**

(45) Publication of the grant of the patent:
**23.08.89 Bulletin 89/34**

(84) Designated Contracting States:
**DE FR GB**

(56) References cited:
**EP-A-0 085 749**

**IBM-TECHNICAL DISCLOSURE BULLETIN, vol. 25, no. 11B, April 1983, New York, USA; R.F. DINAN et al. "Code Tracking", pages 6074-6075**

**IBM-TECHNICAL DISCLOSURE BULLETIN, vol. 25, no. 11B, April 1983, New York, USA; D.A. RAMSEY et al. "Code Recognition", pages 6076-6077**

(73) Proprietor: **International Business Machines Corporation**
**Old Orchard Road**
**Armonk, N.Y. 10504 (US)**

(72) Inventor: **Ramsey, David Arthur**
**5013 Matthews-Mint Hill Road**
**Charlotte North Carolina 28212 (US)**
Inventor: **Rohe, Clair Frederick**
**6432 Snowbird Lane**
**Charlotte North Carolina 28212 (US)**

(74) Representative: **Atchley, Martin John Waldegrave**
**IBM United Kingdom Limited Intellectual Property Department Hursley Park**
**Winchester Hampshire SO21 2JN (GB)**

## Description

The present invention relates to apparatus and a method for reading a two-dimensional bar code having bars located nominally at a predetermined pitch and processing the data obtained in order to identify more accurately the symbols comprising the bar code. More specifically, it relates to apparatus and a method for segmenting the bar code into individual bars for recognition by determining the most likely actual separation of bars located nominally at a fixed pitch.

Various apparatus and methods for optically recognising characters, including bar codes, have existed for many years. This invention concerns recognition of a bar code comprising a two-dimensional set of vertical bars of predetermined lengths and located in selected positions that are nominally spaced at predetermined equal horiziontal intervals. The horizontal distance occupied by one bar plus the space between this bar and the adjacent bar is referred to as the bar pitch, and it is typically fixed. An example of such a bar code is disclosed in European Patent Application 82109506.4 (EP—A—85749) published 17.08.83 which is incorporated herein by reference.

The bar code is "read" or deciphered by an optical scanner which derives optical information on each of the bars and converts this optical information into electrical data pulses that may be processed by a computer or the like. Since the two dimensional bar code is particularly useful in marking bank cheques, it is desirable to be able to read the code at high speed using typical bank chaque data processing equipment. However, the accuracy of high speed reading may be compromised due to irregularities in either the bar code itself or the equipment used to scan and read the bar code or both. For example, bar code errors may include irregular horizontal spacing between vertical bars, top to bottom skew, tilt, partial obliteration of one or more bars, and other stray marks in the vicinity of the bar.

The equipment used to read the bar code typically transports the document bearing the code, such as a bank cheque, past a scanner that repeatedly scans the portion of the document on which the bar code is printed in parallel scan lines extending transversely to the movement of the document. The scanner discriminates between the individual bars and the contrasting background to generate for each scan line a sequence of elements of image data, each element representing either a portion of a bar or a portion of a space between bars. The document usually passes the scanner at a high rate of speed that is coordinated to the rate at which the scanner scans across the document and generates the sequences of elements of image data and to the fixed bar pitch or the width of the spaces between the individual adjacent bars. Problems arise when documents move past the scanner at different speeds, with a skewed orientation, or at a nonconstant speed. This causes the bar code to be out of alignment with the scanner, and the scanner may sense a nonconstant pitch, introducing errors.

The object of the present invention is to provide an improved apparatus and method for reading a two-dimensional bar code having bars located nominally at a predetermined pitch.

The present invention relates to apparatus for reading a two-dimensional bar code having bars located nominally at a predetermined pitch comprising means for scanning the bar code with a plurality of spaced apart scan lines, means for generating for each scan line a sequence of elements of image data, recognition means for recognising said bar code from the sequences of elements of image data, and transferring means for selectively transferring the sequences of elements of image data to the recognition means.

An apparatus of this kind is known for example from the article "Code Recognition" by D. A. Ramsey et al. in IMB Technical Diclosure Bulletin, Vol. 25, No. 11B, April 1983, pages 6076—6077.

Apparatus in accordance with the invention is characterised in that the transferring means comprises means for counting the number of elements of image data a first state in each sequence of elements of image data, means for comparing the element count for each sequence with predetermined criteria to determine whether the sequence of elements of image data is likely to represent the scanning of a bar or the scanning of a space between adjacent bars, and for generating as a result of said comparison an indicating signal for each sequence of elements of image data, representing the likelihood that said seqeuence represents the scanning of a portion of a bar, means for selecting sets of indicating signals, each set representing a respective set of scan lines expected to scan a bar, the space between said bar and the adjacent bar, and the adjacent bar, and means for constituting a profile vector from each of said sets of indicating signals. The apparatus also includes comparison means for determining for each profile vector which of the sequences of elements of image data, the indicating signals of which are used to constrct said profile vector, represent the scanning of a portion of a bar and which of said sequences represents the scanning of a space between adjacent bars. The apparatus further includes means for selectively transferring to the recognition means only those sequences of elements of image data which represent the scanning of a portion of a bar and disregarding all other sequences.

The invention also relates to a method of reading a two-dimensional bar code having bars located nominally at a predetermined pitch comprising scanning the bar code with a plurality of spaced apart scan lines, generating for each scan line a sequence of elements of image data, and selectively transferring the sequences of elements of image data to recognition means.

A method in accordance with the invention is characterised by counting the number of elements of image data of a first state in each sequence of elements of image data, comparing the element count for each sequence with predetermined criteria to determine whether each sequence of elements of image data is likely to represent the scanning of a bar or the scanning of a space between adjacent bars, and generating as a result of said comparison an indicating signal for each sequence of elements of image data representing the likelihood that said sequence represents the scanning of a portion of a bar, selecting sets of indicating signals, each set representing a respective set of scan lines expected to scan a bar, the space between said bar and the adjacent bar, and the adjacent bar, and constructing a profile vector from each of said sets of indicating signals, determining for each profile vector which of the sequences of elements of image data, the indicating signals of which are used to construct said profile vector, represent the scanning of a portion of a bar and which of said sequences represent the scanning of a space between adjacent bars. The method further includes selectively transferring to a recognition means only those sequences of elements of image data which represent the scanning of a portion of a bar and disregarding all other sequences.

By using apparatus and method in accordance with the invention it is possible to determine more accurately the segmentation points separating adjacent bars of the bar code, thereby enabling the bar code to be read more accurately.

In order that the invention may be more readily understood an embodiment will now be described with reference to the accompanying drawings, in which:

Figure 1 is a schematic block diagram illustrating apparatus for reading a two-dimensional bar code according to the present invention,

Figure 2 is an enlarged illustration of a representative two-dimensional bar code which can be read using the apparatus illustrated in Figure 1,

Figure 3 illustrates typical sequences of elements of image data produced by scanning the two-dimensional bar code of Figure 2,

Figure 4 illustrates the scan line element counts corresponding to the sequences of elements of image data illustrated in Figure 3,

Figure 5 illustrates the scan line binary values which are based on the scan line element counts illustrated in Figure 4 and which are used to form profile vectors,

Figure 6 illustrates those sequences of elements of image data illustrated Figure 3 transferred to recognition means and those sequences of elements of image data which are disregarded or skipped, and

Figure 7 is a schematic block diagram illustrating a logic system for implementation of the present invention.

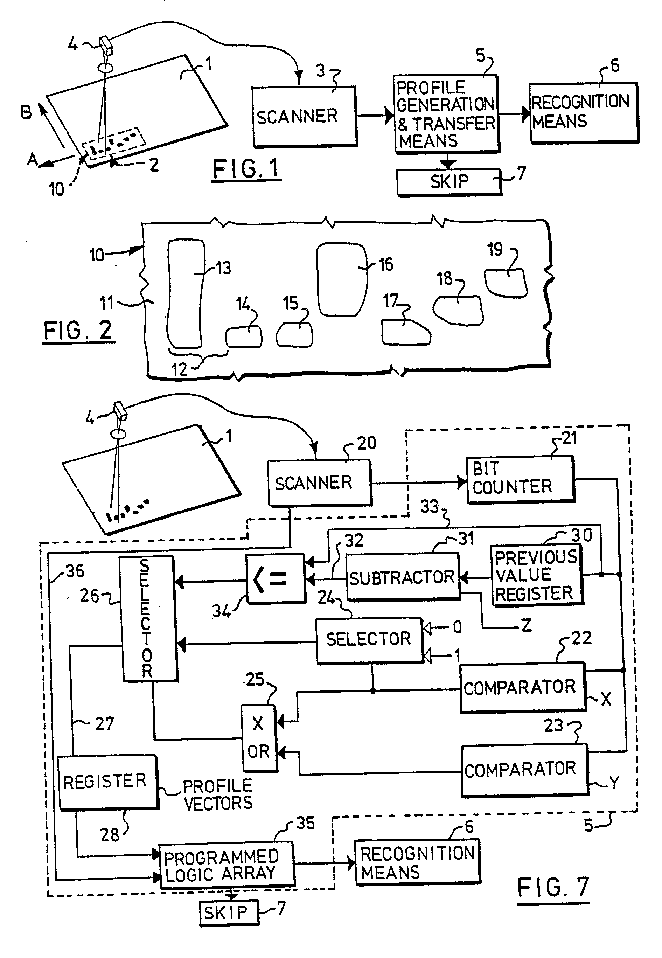

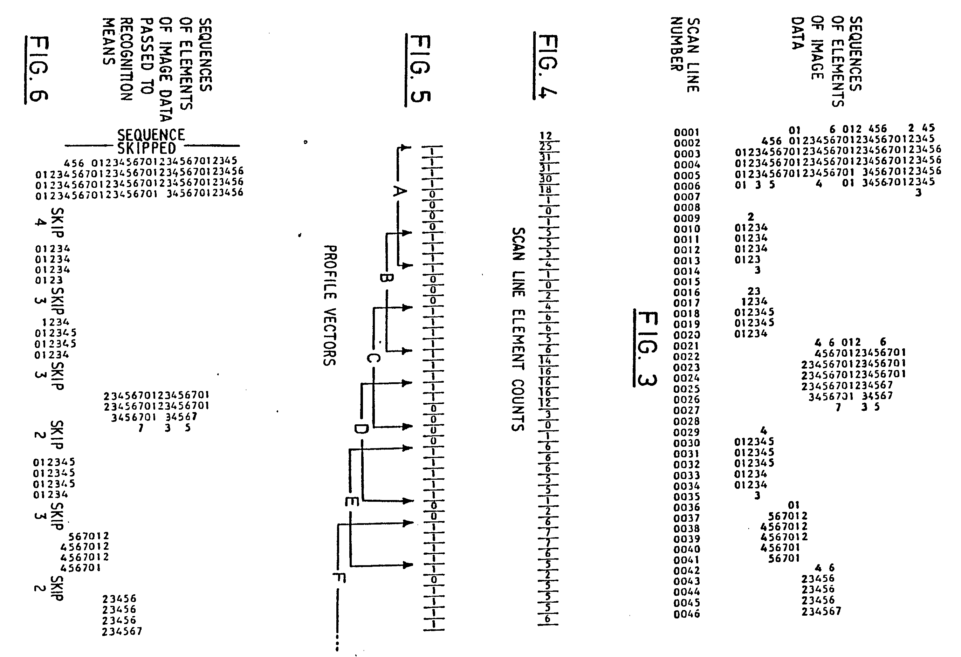

Referring to Figures 1 and 2, a record or document 1, such as a bank cheque, includes a two-dimensional bar code 2 at a predetermined location such as the lower left corner and is moved past an optical scanner 3 including optically sensitive apparatus 4 in the direction of the arrow A. The optical scanner 3, in a manner well known in the art, scans that portion of the document 1 expected to include the bar code in a plurality of parallel scan lines extending in the direction of the arrow B at right angles to the direction of movement of the document 1. The optically sensitive apparatus 4 distinguishes between a bar of the bar code and a space or background. For each scan line the apparatus 4 generates a sequence of elements of image data each element corresponding to the reading of either a portion of a bar or a portion of a space between adjacent bars.

The sequences of elements of image data generated by the scanner 3 are supplied to a profile generation and transfer means 5 and form the basis for the generation of profile vectors which are used to determine the likelihood that a sequence of elements of image data represents the scanning of a bar of the bar code. Those sequences of elements which are deemed most representative of the scanning of a bar are transferred to recognition means 6 and those sequences of elements which are deemed less likely to represent the scanning of a bar and are disregarded or skipped as indicated at 7 as representing the scanning of a space between bars, even though they may contain a significant number of elements of image data representing the reading of portions of a bar.

Figure 2 illustrates an enlargement of a typical two-dimensional bar code comprising a number of bars 13—19 spaced apart nominally at a predetermined pitch. Each bar has a predetermined length, position and orientation representative of the information to be conveyed. The bars are located in a predetermined zone 10 that corresponds to the field scanned by the scanner 3. The bars 13—19 are printed to contrast with the background 11 so that the scanner 3 can discriminate between the bars and the background. The bars 13—19 are printed at a nominally fixed pitch, meaning that the distance 12 of a bar width and the adjacent bar-to-bar space is nominally fixed.

A starting symbol 13, which is longer than the other symbols, is typically provided at the edge of the zone 10 containing the bar code that first enters the field of the scanner 3. Such a starting symbol identifies the first element of the bar code, assists in defining the boundaries of the zone 10 that contains the bar code, initiates the generation of elements of image data representing the profiles of the bars, and assists in normalising the shape, size and location of the bars forming the bar code.

Errors in printing the bar code may include irregular horizontal spacing between vertical bars, top to bottom skew, tilt, partial obliteration of one or more of the bars, and stray marks in the vicinity of the bars. These errors are illustrated by way of example in Figure 2 where the bars are shown as having different irregular shapes. By comparison, perfectly formed bars would be illustrated as regularly spaced and shaped as parallel sided rectangles with straight sides and right angled corners. An example of a bar code suitable for use with the present invention is disclosed in European Patent Application 82109506.4 (EP—A—85749) published 17.08.83.

Referring to Figure 3, the numbers 0001 to 0046 correspond to successive scan lines across the bar code illustrated in Figure 2 and to the sequences of elements of image data generated during the scanning along each scan line. These sequences of elements of image data are typical of the data that would be provided to the profile generation and transfer means 5. Those elemental areas of each scan line for which the optically sensitive apparatus 4 of scanner 3 detects a portion of a bar are represented by the presence of one of the digits 0 to 7, and those elemental areas for which the optically sensitive apparatus 4 of scanner 3 detects a space between bars are blank. The sequences of elements of image data are generated as the bar code passes through the field of the scanner 3 and the scanner 3 scans in successive scan lines across the document 1.

Referring to Figure 4, for each scan line and the corresponding sequence of elements of image data generated by the scanner, a count is accumulated reflecting the number of bits of bar image data, i.e. picture elements representing bar data or bar pels, as represented by one of the digits 0 to 7. For instance, reading vertically downward from Figure 3 to Figure 4, for scan line 0001, twelve bar image pels were detected and for scan line 0002, twenty five bar image pels were detected. The scan line element counts are generated as the sequences of elements of image data are presented to counter means.

The count of the number of bits of bar image data for each scan line is provided to decision logic to determine the likelihood that the associated sequence of elements of image data represents the scanning of a bar or the scanning of a space between adjacent bars. The term "a space between adjacent bars" includes an area containing insufficient portions of a bar to be deemed reliably to represent a bar. According to criteria determined by the decision logic, an indicator in the form of a scan line binary value, i.e. a 1 or a 0, is assigned to each sequence of elements of image data and each of these values is sequentially stored in a register in a respective location which corresponds to the associated scan line. The register thus contains the indicators representing the characteristics of the sequences of elements of image data generated from the scan lines. For instance, referring to Figure 5 and reading vertically downward from Figures 3 and 4, the sequence of elements of image data generated from scan line 0003 is assigned a 1 because its count of thirty one bar image pels represents the scanning of a bar, and the sequence of elements of image data generated from scan line 0016 is assigned a 0 because its count of two bar image pels represents the scanning of a space between adjacent bars. These assigned scan line binary values are combined as described below with reference to Figure 5 to form profile vectors of the bar code scanned.

Using the stored scan line binary values, a profile vector comprising the eleven sequential scan line binary values for one bar pitch (i.e. one nominal bar width plus one nominal space between adjacent bars) plus one additional bar width is constructed. Based upon the nominally known pitch, this comprises the scan line binary values for four scan lines over a bar plus three scan lines over a space between this bar and the adjacent bar plus four scan lines over the adjacent bar, for a total of eleven scan lines. This is designated profile vector A in Figure 5.

Each constructed profile vector is compared in a programmable logic array with a set of stored profile vectors for each of which a decision is provided relating to the sequences of elements used to construct the profile. These decisions indicate for each sequence of elements of image data used to construct the profile vector whether the sequence represents the scanning of a bar or whether the sequence represents the scanning of a space between adjacent bars. The decisions take into account all the sequences used to construct the profile vector and may be contained in a look-up table. The stored profile vector with which profile vector A is found to correspond will provide the decisions that the sequences of elements of image data generated from the first four scan lines and represented by the first four scan line binary values of the profile vector A are assumed to represent the scanning of a bar, and how many of the succeeding scan lines following the first four are disregarded or skipped to get to the next scan lines generating sequences of elements of image data likely to represent the scanning of a bar. In the arrangement illustrated, for profile vector A the sequences of elements of image data generated from the first four scan lines are designated as representing the scanning of a bar, and the sequences of elements of image data generated from the next four scan lines are disregarded or skipped to get to the following scan lines most likely to generate sequences of elements of image data representing the scanning of the next bar, namely the sequences generated by scan lines represented by the last three scan line binary values of profile vector A.

Those sequences of elements of image data for which a decision is provided by the programmable logic array that they represent the scanning of a bar are transferred to the recognition means. Those sequences of elements of image data for which a decision is provided by the programmable logic array that they represent the scanning of a space between adjacent bars are disregarded. In the present example, the sequences of elements of image data generated from scan lines 0002—0005 are transferred to the recognition logic and the sequences of elements of image data generated from scan lines 0006—0009 are disregarded or skipped. The sequence of elements of image data generated from scan line 0001 is disregarded as corresponding to the scanning of the start bar or used in the normalisation process. This may be done in any manner well known in the art, and is typically tailored to the characteristics of each start bar for each bar code.

After the sequences of elements of image data have been transferred to the recognition means or skipped, a second eleven scan line binary value profile vector B is constructed to the original complement of one bar pitch plus one additional bar width, with the last three scan line binary values of the preceding profile vector A forming the initial portions of the succeeding profile vector B, as illustrated in Figure 5. As detailed above, the sequence of elements of image data generated from scan lines 0002—0005 were deemed representative of the scanning of a bar and were transferred to recognition means, the sequence of elements of image data generated from scan lines 0006—0009 were deemed representative of the scanning of a space between adjacent bars and were disregarded. The sequence of elements of image data generated from scan lines 0010—0012 are retained to complete the profile vector complement of one bar pitch plus one additional bar width. Profile vector B begins with scan line 0010 and extends to and includes scan line 0020.

Profile vector B is presented to the programmed logic array as described earlier for profile vector A and will be found to correspond with a stored profile vector which will provide decisions relating to the sequences of elements of image data used to construct profile vector B. The sequences of elements of image data generated from the first four scan lines 0010—0013 are automatically designated as representative of the scanning of a bar and are transferred to the recognition means, and the sequences of elements of image data generated from scan lines 0014—0016 are disregarded as being representative of the scanning of a space between adjacent bars. The sequences of elements of image data generated from scan lines 0017—0020 are retained for construction of profile vector C. Successive profile vectors C, D, E, F, etc. are constructed and compared with the stored profile vectors in the programmed logic array as required until the end of the bar code has been reached. If any profile vector does not correspond with any stored profile vector, the decision on the number of sequences of elements of image data to be disregarded defaults to the nominal bar pitch, which in the present example corresponds to three sequences.

The following table identifies those sequences of elements of image data generated from scan lines to be disregarded or skipped for each profile vector presented to the programmed logic array. This is illustrated in Figure 6.

| Profile vector | Disregarded sequences of elements |
|:---:|:---:|
| A | 0006—0009 |
| B | 0014—0016 |
| C | 0021—0023 |
| D | 0028—0029 |
| E | 0034—0036 |
| F | 0041—0042 |

To initiate the construction of a profile vector from the sequences of elements of image data, as ilustrated in Figure 5, the starting symbol 13 is recognized and normalised. It is recognised by first recognising a sequence of elements of image data that is likely to represent the scanning of a bar rather than noise or background, and then determining whether this sequence of elements of image data represents the scanning of a bar image or of a starting symbol.

Specifically the apparatus being described looks first for a sequence of elements of image data containing at least 14 bar image pels, followed by at least one of the three succeeeding sequences containing at least 20 bar image pels. Having confirmed the presence of a start bar, its width is determined and the generation of the sequences of elements of image data to form the profile vectors of the image data is initiated. The start bar width is defined by incrementing a start bar counter by one step for the first scan line for which is generated a sequence of elements of image data of a bar and one step for each of the succeeding scan lines from which is generated a sequence of elements of image data containing at least 20 bar image pels. The collection of scan line binary values to form the profile vectors of the sequences of elements of image data begins with the scan line which first scans the start bar.

The number of steps in the start bar counter is used to select which scan line binary value shall be used to initiate the first profile vector. Specifically, one scan line binary value is bypassed for every other step counted beyond four. If the start bar counter has five or six counts, one sequence of elements of image data is skipped and the profile vector begins with scan line 0002. If the count is seven or eight, two sequences of elements of image data are skipped and the profile vector begins with scan line 0003. In the illustrated embodiment, the scan line which first scans the start bar is scan line 0002, because it is the first scan line generating a sequence of elements of image data containing at least 14 bar image pels, and scan lines 0003—0005 are the succeeding scan lines generating sequences of elements of image data containing at least 20 bar image pels. Thus, the start bar comprises scan lines 0002—0005, with scan line 0001 being skipped, and the first profile vector begins with scan line 0002.

Referring to Figure 7, the digitized sequence of elements of image data generated from each scan line performed by the scanner 20 (equivalent to the scanner 3 illustrated in Figure 1) is provided in timed sequence to a bit counter 21 which counts the number of elements corresponding to the bar image pels detected during each scan line. This information is represented by the scan line element counts in Figure 4. Each scan line element count is provided to two fixed value comparators 22, 23 and to a register 30. The first comparator 22 determines whether the scan line element count exceeds a predetermined value X, as might happen for a start bar. If this is so, the comparator 22 produces an output signal representing that the corresponding sequence of elements of image data contains a sufficient number of elements corresponding to the detection of bar image pels to be designated as representing the scanning of a bar. Similarly, the second comparator 23 determines whether the scan line element count is less than a predetermined value Y, which identifies the corresponding sequence of elements of image data as having an insufficient number of bar image pels to be designated as representing the scanning of a bar. In this case the sequence of elements of image data is designated as representing the scanning of a space between adjacent bars, even though it may contain several bar image elements. The values X and Y may be set as necessary or desirable to, for instance, automatically identify a start symbol or eliminate noise.

The output of comparator 22 is provided to a selector 24 and to an exclusive OR gate 25. Selector 24 presents the appropriate scan line binary value logic 1 to a selector 26 and the output of the exclusive OR gate 25 causes selector 26 to gate the logic 1 signal through to present the binary value 1 on line 27 indicating that the associated scan line has scanned a bar.

The output of comparator 23 is provided to exclusive OR gate 25. In the absence of an output from comparator 22, selector 24 provides a binary value logic 0 which is gated through the selector 26 to appear as a binary value logic 0 on line 27, representing the scanning of a space between adjacent bars by the associated scan line.

The output from bit counter 21 is also provided to a previous value register 30. If neither of the criteria for the two comparators 22, 23 is satisfied, the scan line binary value for the sequence of elements of image data under consideration is obtained by comparing the scan line element count for the present sequence with the scan line element count for the previous sequence. The scan line element count for the previous sequence is stored in a previous value register 30, and a constant Z is subtracted from this previous scan line element count in a subtractor 31 to provide an adjusted scan line element count on line 32. The adjusted scan line element count is compared in a comparator 34 with the scan line element count under consideration provided via line 33. The output of comparator 34 is a logic 1 if the scan line element count of the sequence under consideration is equal to or greater than the adjusted scan line element count of the previous sequence, and it is a logic 0 otherwise. This scan line binary value is provided to selector 26 and is gated through to line 27 in the absence of a signal from exclusive OR gate 25. Each of the scan line element counts is sequentially processed in this manner and the scan line binary value for each scan line is supplied to a serial to parallel shift register 28 to be used in constructing the various profile vectors A—F as illustrated in Figure 5.

The profile vectors, as completed, are supplied in parallel to a programmed logic array 35 in which are stored a set of profile vectors together with decisions for each stored profile vector. Each profile vector constructed in register 28 is compared in programmed logic array 35 with all the stored profile vectors until the corresponding stored profile is determined. The decisions relating to each stored profile vector which corresponds with a supplied profile vector are used to determine which of the sequences of elements of image data used in the construction of the supplied profile are to be transferred to the recognition means 6 and which are to be disregarded or skipped as indicated at 7.

The sequences of elements of image data generated by the scanner 20 are supplied on a line 36 to the programmed logic array 35 and stored there in a suitable buffer (not illustrated). The initial sequences which are taken to represent the scanning of a start bar (the sequence generated by the scan line 0001 in the above description) are not supplied to the programmed logic array 35.

The decisions relating to the stored profile vector which corresponds with each supplied profile vector are used to decide which of the sequences of elements of image data used in the construction of the supplied profile vector are to be transferred to the recognition means 6 and which are to be disregarded or skipped as indicated at 7.

In general terms, for each constructed profile vector the sequences of elements of image data used to construct the first portion of the profile vector are transferred to the recognition means 6, those sequences of elements of image data used to construct the middle portion of the profile vector are disregarded, and those sequences of elements of image data used to construct the last portion of the profile vector are used to construct the initial portion of the following profile vector.

Apparatus as described above can be implemented in real time on a bar-to-bar basis which adjusts for gradual changes in the bar code as the document is scanned. Advantages include the ability to update the bar code segmentation on an individual bar-to-bar basis as required, the ability to function over a wide range of bar widths and lengths, the ability to accommodate automatic scanning equipment where the document transport speeds vary from machine to machine, the ability to recognise a starting symbol and the ability to easily modify the decoding information utilised in the look-up tables, programmed logic, or automatic bar and space comparators.

## Claims

1. Apparatus for reading a two-dimensional bar code having bars located nominally at a predetermined pitch comprising

means (3, 20) for scanning said bar code (2) with a plurality of spaced apart scan lines.

means (3, 20) for generating for each scan line a sequence of elements of image data,

recognition means (6) for recognising said bar code from said sequences of elements of image data, and

transferring means (5) for selectively transferring said sequences of elements of image data to said recognition means, characterised in that

said transferring means (5) comprises

means (21) for counting the number of elements of image data of a first state in each sequence of elements of image data,

means (22, 23, 24, 30, 31, 32, 33, 34) for comparing the element count for each sequence with predetermined criteria to determine whether the sequence of elements of image data is likely to represent the scanning of a bar or the scanning of a space between adjacent bars, and for generating as a rsult of said comparison an indicating signal for each sequence of elements of image data, representing the likelihood that said sequence represents the scanning of a portion of a bar,

means (26, 28) for selecting sets of indicating signals, each set representing a respective set of scan lines expected to scan a bar, the space between said bar and the adjacent bar, and the adjacent bar, and means for constructing a profile vector from each of said sets of indicating signals,

comparison means (35) for determining for each profile vector which of the sequences of elements of image data, the indicating signals of which are used to construct said profile vector, represent the scanning of a portion of a bar and which of said sequences represent the scanning of a space between adjacent bars, and

means (35) for selectively transferring to said recognition means only those sequences of elements of image data which represent the scanning of a portion of a bar and disregarding all other sequences.

2. Apparatus according to Claim 1, characterised in that each of said indicating signals has a binary value.

3. Apparatus according to Claim 1 or Claim 2, characterised in that

said means for comparing the element count for each sequence with predetermined criteria comprises

first discriminatory test means (22) for determining whether a sequence comprises primarily elements of a first state,

second discriminatory test means (23) for determining whether a sequence comprises primarily elements of a second state, and

third discriminator test means (30, 31, 32, 33, 34) for determining whether a sequence not satisfying said first or said second discriminatory test means comprises primarily elements of said first or said second state.

4. Apparatus according to Claim 3, characterised in that said third discriminatory test means (30, 31, 32, 33, 34) comprises means for comparing the element count of each sequence of elements with the element count of a previous sequence of elements.

5. Apparatus according to any one of the preceding claims, characterised in that

said comparison means (35) comprises

a storage device for storing a plurality of profile vectors together with decisions related to each stored profile vector,

means for comparing each constructed profile vector with said stored profile vectors to identify for each constructed profile vector a corresponding stored profile vector, and

means for utilising the decisions relating to the corresponding stored profile vector to determine which of the sequences of elements of image data, the indicating signals of which are used to construct said constructed profile vector, represent the scanning of a portion of a bar and which sequences represent the scanning of a space between adjacent bars.

6. Apparatus according to Claim 5, characterised in that said storage device comprises a programmed logic array.

7. Apparatus according to any one of the preceding claims, characterised in that

said means (3, 20) for scanning said bar code comprises means for scanning the bar code in a direction parallel to the bar code longitudinal axis in increments that are submultiples of the bar pitch.

8. A method of reading a two-dimensional bar code having bars located nominally at a predetermined pitch comprising:

scanning the bar code with a plurality of spaced apart scan lines,

generating for each scan line a sequence of elements of image data, and

selectively transferring said sequences of elements of image data to recognition means, characterised by

counting the number of elements of image data of a first state in each sequence of elements of image data,

comparing the element count for each sequencce with predetermined criteria to determine whether each sequence of elements of image data is likely to represent the scanning of a bar or the scanning of a space between adjacent bars, and generating as a result of said comparison an indicating signal for each sequence of elements of image data representing the likelihood that said sequence represents the scanning of a portion of a bar,

selecting sets of indicating signals, each set representing a respective set of scan lines expected to scan a bar, the space between said bar and the adjacent bar, and the adjacent bar, and constructing a profile vector from each of said sets of indicating signals,

determining for each profile vector which of the sequences of elements of image data, the indicating signals of which are used to construct said profile vector, represent the scanning of a portion of a bar and which of said sequences representing the scanning of a space between adjacent bars, and

selectively transferring to said recognition means only those sequences of elements of image data which represent the scanning of a portion of a bar and disregarding all other sequences.

9. A method according to Claim 8, characterised in that each of said indicating signals has a binary value.

10. A method according to Claim 8 or Claim 9, characterised in that said comparison operation comprises

a first discriminatory test for determining whether a sequence comprises primarily elements of a first state;

a second discriminatory test for determining whether a sequence comprises primarily elements of a second state; and

a third discriminatory test for determining whether a sequence not satisfying said first or said second discriminatory test comprises primarily elements of said first or said second state.

11. A method according to Claim 10, characterised in that

said third discriminatory test comprises comparing the element count of each sequence of elements with the element count of a previous sequence of elements.

12. A method according to any one of the preceding claims 8, 9, 10 or 11, characterised in that said determining operation comprises

storing a plurality of profile vectors together with decisions related to each stored profile vector,

comparing each constructed profile vector with said stored profile vectors to determine for each constructed profile vector a corresponding stored profile vector, and

utilising the decisions relating to the corresponding stored profile vector to determine which of the sequences of elements of image data, the indicating signals of which are used to construct said profile vector, represent the scanning of a portion of a bar and which sequences represent the scanning of a space between adjacent bars.

**Patentansprüche**

1. Gerät zum Lesen eines zweidimensionalen Strichcodes, wobei die Striche nominell in vorbestimmter Schrittweite angeordnet sind, mit

einer Abtasteinrichtung (3, 20) zum Abtasten des Bar-Codes (2) mit einer Vielzahl von im Abstand voneinander angeordneten Abtastzeilen,

einer Einrichtung (3, 20) zum Erzeugen einer Sequenz von Bilddatenelementen für jede der Abtastzeilen,

einer Erkennungseinrichtung (6) zum Erkennen des Bar-Codes aus der Sequenz von Bilddatenelementen und mit einer übertragungseinrichtung (5) zur selektiven Übertragung der Sequenzen von Bilddatenelementen zu der Erkennungseinrichtung, dadurch gekennzeichnet, daß

die Übertragungseinrichtung (5) folgendes umfaßt:

eine Einrichtung (21) zum Zählen der Anzahl von Bilddatenelementen eines ersten Zustands in jeder Sequenz von Bilddatenelementen,

Einrichtungen (22, 23, 24, 30, 31, 32, 33, 34) zum Vergleich der Elementenanzahl für jede Sequenz mit festgelegten Kriterien, um zu entscheiden, ob die Sequenz der Bilddatenelemente geeignet ist, das Abtasten eines Striches bzw. das Abtasten eines Abstandes zwischen zwei nebeneinanderliegenden Strichen zu repräsentieren und zum Erzeugen eines Anzeigesignals als Ergebnis dieses Vergleichs für jede Sequenz von Bilddatenelementen, wodurch die Wahrscheinlichkeit repräsentiert wird, daß die Sequenz das Abtasten eines Teils eines Striches repräsentiert,

einer Einrichtung (26, 28) zum Auswählen von Anzeigesignalsätzen, wobei jeder Satz einen entsprechenden Satz von Abtastzeilen repräsentiert, von dem angenommen wird,

daß er einen Strich, den Abstand zwischen dem Strich und dem danebenliegenden Strich, und den danebenliegenden Strich und Einrichtungen zum Aufbauen eines Profilvektors von jedem der Anzeigesignalsätze repräsentiert, einem Vergleicher (35), durch den für jeden Profilvektor bestimmt wird, welche der Sequenzen von Bilddatenelementen, deren Anzeigesignale für den Aufbau des Profilvektors verwendet worden sind, das Abtasten eines Teiles eines Striches repräsentiert und welche der Sequenzen das Abtasten eines Abstandes zwischen nebeneinanderliegenden Strichen repräsentiert, und mit einer Einrichtung (35) zur selektiven Übertragung von nur den Sequenzen von Bilddatenelementen zur Erkennungseinrichtung, die das Abtasten eines Teils eines Striches darstellen, wobei alle anderen Sequenzen ignoriert werden.

2. Gerät nach Anspruch 1, dadurch gekennzeichnet, daß jedes der Anzeigesignale einen binären Wert aufweist.

3 Gerät nach Anspruch 1 oder 2, dadurch gekennzeichnet, daß die Einrichtung zum Vergleichen der Anzahl von Elementen für jede Sequenz mit festgelegten Kriterien folgendes umfaßt:

eine erste unterscheidende Testeinrichtung (22), mit der bestimmt wird, ob eine Sequenz primär Elemente eines ersten Zustands aufweist,

eine zweite unterscheidende Testeinrichtung (23), mit der bestimmte wird, ob eine Sequenz primär Elemente eines zweiten Zustands aufweist, und

eine dritte unterschiedliche Testeinrichtung (30, 31, 32, 33, 34), mit der bestimmt wird, ob eine Sequenz, die weder die erste noch die zweite Testeinrichtung zufriedenstellt, primär Elemente des ersten oder zweiten Zustands aufweist.

4. Gerät nach Anspruch 3, dadurch gekennzeichnet, daß die dritte unterschiedende Testeinrichtung (30, 31, 32, 33, 34) eine Vergleichseinrichtung zum Vergleich der Anzahl von Elementen jeder Elementsequenz, mit der Anzahl von Elementen einer früheren Elementsequenz aufweist.

5. Gerät nach einem der vorhergehenden Ansprüche, dadurch gekennzeichnet, daß der Vergleicher (35) folgendes umfaßt:

einen Speicher zum Speichern einer Vielzahl von Profilvektoren zusammen mit den zu jedem gespeicherten Profilvektor gehörigen Entscheidungen,

eine Einrichtung zum Vergleichen jedes aufgebauten Profilvektors mit den gespeicherten Profilvektoren, so daß für jeden aufgebauter Profilvektor ein entsprechender gespeicherter Profilvektor identifiziert werden kann, und eine Einrichtung zum Anwenden der sich auf die entsprechenden gespeichertern Profilvektoren beziehenden Entscheidungen, so daß bestimmt wird, welche der Sequenzen von Bilddatenelementen, mit deren Anzeigesignale der aufgebaute Profilvektor erstellt worden ist, daß Abtasten eines Teils eines Striches und welche Sequenzen das Abtasten eines Abstandes zwischen nebeneinanderliegenden Strichen darstellt.

6. Gerät nach Anspruch 5, dadurch gekennzeichnet, daß der Speicher ein programmiertes logisches Feld aufweist.

7. Gerät nach einem der vorhergehenden Ansprüche dadurch gekennzeichnet, daß die Einrichtung (3, 20) zum Abtasten des Barcodes eine Vorrichtung aufweist, mit welcher der Barcode parallel zu seiner Längsachse in Schritten abgetastet wird, die Teile der Schrittweite der Striche sind.

8. Verfahren zum Lesen eines zweidimensionalen Strichcodes, dessen Striche nominell in vorbestimmter Schrittweite angeordnet sind, wobei

der Strichcode mit einer Vielzahl von im Abstand voneinander angeordneten Abtastzeilen abgetastet wird,

für jede Abtastzeile eine Sequenz von Bilddatenelementen erzeugt wird und

die Sequenzen von Bilddatenelementen selektiv zu einer Erkennungseinrichtung übertragen werden, dadurch gekennzeichnet, daß

die Anzahl von Bilddatenelementen eines ersten Zustands in jeder Sequenz von Bilddatenelementen gezählt wird,

die Anzahl von Bilddatenelementen für jede Sequenz mit festgelegten Kriterien verglichen werden, so daß bestimmt werden kann, ob jede Sequenz von Bilddatenelementen geeignet ist, das Abtasten eines Striches bzw. das Abtasten eines Abstandes zwischen nebeneinanderliegenden Strichen zu repräsentieren und wobei als Ergebnis des Vergleichs für jede Sequenz von Bilddatenelementen ein Anzeigesignal erzeugt wird, wodurch die Wahrscheinlichkeit angezeigt wird, daß diese Sequenz das Abtasten eines Teils eines Striches repräsentiert,

Sätze von Anzeigesignalen ausgewählt werden, wobei jeder Satz einen entsprechenden Satz von Abtastzeilen repräsentiert, von denen angenom-

men wird, daß sie einen Strich, den Abstand zwischen dem Strich und dem danebenliegenden Strich und den danebenliegenden Strich abtasten, und wobei ein Profilvektor aus jedem der Anzeigesignalsätze aufgebaut wird,

für jeden Profilvektor bestimmt wird, welche der Sequenzen von Bilddatenelemente, deren Anzeigesignale für den Aufbau des Profilvektor verwendet worden sind, das Abtasten eines Teils eines Striches und welche der Sequenzen das Abtasten eines Abstands zwischen nebeneinanderliegenden Strichen repräsentiert, und daß nur jene Sequenzen von Bilddatenelementen selektiv zu der Erkennungseinrichtung übertragen werden, welche das Abtasten eines Teils eines Striches repräsentiert, wobei alle anderen Sequenzen ignoriert werden.

9. Verfahren nach Anspruch 8, dadurch gekennzeichnet, daß jedes der Anzeigesignale einen binären Wert aufweist.

10. Verfahren nach Anspruch 8 oder 9, dadurch gekennzeichnet, daß der Vergleicher umfaßt:

einen ersten unterscheidenden Test, mit dem bestimmt wird, ob eine Sequenz primär Elemente eines ersten Zustands aufweist,

einen zweiten untescheidenden Test, mit dem bestimmt wird, ob eine Sequenz primär Elemente eines zweiten Zustands aufweist, und

einen dritten unterscheidenden Test, mit dem bestimmt wird, ob eine Sequenz, welche den ersten bzw. zweiten Test nicht besteht, primär Elemente des ersten oder des zweiten Zustands aufweist.

11. Verfahren nach Anspruch 10, dadurch gekennzeichnet, daß in dem dritten unterscheidenden Test die Anzahl von Elementen jeder Elementensequenz mit der Anzahl von Elementen einer früheren Elementensequenz verglichen wird.

12. Verfahren nach einem der Ansprüche 8, 9, 10 oder 11, dadurch gekennzeichnet, daß bei Bestimmung eine Vielzahl von Profilvektoren zusammen mit den zu jedem gespeicherten Profilvektor gehörenden Enscheidungen gespeichert wird,

jeder aufgebaute Profilvektor mit den gespeicherten Profilvektoren verglichen wird, so daß für jeden aufgebauten Profilvektor ein entsprechender gespeicherter Profilvektor bestimmt werden kann und daß

die zu den entsprechenden gespeicherten Profilvektoren gehörenden Entscheidungen verwendet werden, um zu bestimmen, welche der Sequenzen von Bilddatenelementen, mit deren Anzeigesignalen der Profilvektor aufgebaut worden ist, das Abtasten eines Teils eines Striches und welche der Sequenzen das Abtasten eines Abstandes zwischen nebeneinanderliegenden Strichen repräsentiert.

## Revendications

1. Appareil pour lire un code barres en deux dimensions ayant des barres situées nominalement à un écartement prédéterminé, comportant

des moyens (3, 20) pour balayer ledit code barres (2) avec un pluralité de lignes de balayage espacées les unes des autres

des moyens (3, 20) pour générer pour chaque ligne de balayage une séquence d'éléments de données d'image,

des moyens de reconaissance (6) pour reconnaître ledit code barres à partir desdites séquences d'éléments de données d'image, et

des moyens de transfert (5) pour transférer sélectivement lesdites séquences d'éléments de données d'image vers lesdits moyens de reconnaissance, caractérisé en ce que

lesdits moyens de transfert (5) comportent

des moyens (21) pour compter le nombre d'éléments de données d'image d'un premier état dans chaque séquence d'éléments de données d'image,

des moyens (22, 23, 24, 30, 31, 32, 33, 34) pour comparer le décompte des éléments pour chaque séquence avec des critères prédéterminés pour déterminer si la séquence d'éléments de données d'image est susceptible de représenter le balayage d'une barre ou le balayage d'un espace entre des barres adjacentes, et pour générer en résultat de ladite comparaison un signal d'indication pour chaque séquence d'éléments de données d'image, représentant la probabilité pour que ladite séquence représente le balayage d'une partie d'une barre,

des moyens (26, 28) pour sélectionner des jeux de signaux d'indication, chaque jeu représentant un jeu respectif de lignes de balayage supposées balayer une barre, l'espace entre ladite barre et la barre adjacente, et la barre adjacente, et des moyens pour construire un vecteur de profil pour chacun desdits jeux de signaux d'indication,

des moyens de comparaison (35) pour déterminer pour chaque vecteur de profile quelles sont les séquences d'éléments de données d'image, dont les signaux d'indication sont utilisés pour construire ledit vecteur de profil, qui représentent le balayage d'une partie d'une barre, et lesquelles desdites séquences représentent le balayage d'un espace entre des barres adjacentes, et

2. Appareil selon la revendication 1, caractérisé en ce que chacun desdits signaux d'indication a une valeur binaire.

3. Appareil selon la revendication 1 ou la revendication 2, caractérisé en ce que

lesdits moyens pour comparer le décompte des éléments pour chaque séquence avec des critères prédéterminés comportent

des premiers moyens (22) de test de discrimination pour déterminer si une séquence comporte principalement des éléments d'un premier état,

des deuxièmes moyens (23) de test de discrimination pour déterminer si une séquence comporte principalement des éléments d'un deuxième état, et

des troisièmes moyens (30, 31, 32, 33, 34) de test de discrimination pour déterminer si une séquence ne satisfaisant pas auxdits premiers ou auxdits deuxièmes moyens de test de discrimination comportent principalement des éléments dudit premier ou dudit deuxième état.

4. Appareil selon la revendication 3, caractérisé en ce que lesdits troisièmes moyens (30, 31, 32, 33, 34) de test de discrimination comportent des moyens pour comparer le décompte des éléments de chaque séquence d'éléments avec le décompte des éléments d'une précédente séquence d'éléments.

5. Appareil selon l'une quelconque des précédentes revendications, caractérisé en ce que

lesdits moyens de comparaison (35) comportent un dispositif de mémorisation pour mémoriser une pluralité de vecteurs de profils ainsi que des décisions en relation avec chaque vecteur de profil mémorisé,

des moyens pour comparer chaque vecteur de profil construit avec lesdits vecteurs de profils mémorisés afin d'identifier pour chaque vecteur de profil construit un vecteur de profil mémorisé correspondant, et

des moyens pour utiliser les décisions concernant le vecteur de profil mémorisé correspondant afin de déterminer laquelle des séquences d'éléments de donnés d'image, dont les signaux d'indication sont utilisés pour construire ledit vecteur de profil construit, représente le balayage d'une partie d'une barre et quelles séquences représentent le balayage d'une espace entre des barres adjacentes.

6. Appareil selon la revendication 5, caractérisé en ce que ledit dispositif de mémorisation comporte un réseau logique programmé.

7. Appareil selon l'une quelconque des revendications précédentes, caractérisé en ce que

lesdits moyens (3, 20) pour balayer ledit code barres comportent des moyens pour balayer le code barres dans une direction parallèle à l'axe longitudinal du code barres par incréments qui sont des sous-multiples de l'écartement des barres.

8. Procédé de lecture d'un code barres en deux dimensions ayant des barres situées nominalement à un écartement prédéterminé, comportant:

le balayage du code barres avec une pluralité de lignes de balayage espacées les unes des autres,

la génération pour chaque ligne de balayage d'une séquence d'éléments de données d'image, et

le transfert sélectif desdites séquences d'éléments de données d'image vers des moyens de reconnaissance, caractérisé par

le comptage du nombre d'éléments de données d'image d'un premier état dans chaque séquence d'éléments de données d'image,

la comparaison du décompte des éléments pour chaque séquence avec des critères prédéterminés pour déterminer si chaque séquence d'éléments de données d'image est susceptible de représenter le balayage d'une barre ou le balayage d'un espace entre des barres adjacentes, et la génération en résultat de ladite comparaison d'un signal d'indication pour chaque séquence d'éléments de données d'image représentant la probabilité pour ladite séquence de représenter le balayage d'une partie d'une barre,

la sélection de jeux de signaux d'indication, chaque jeu représentant un jeu respectif de lignes de balayage supposées balayer une barre, l'espace entre ladite barre et la barre adjacente, et la barre adjacente, et la construction d'un vecteur de profil à partir de chacun desdits jeux de signaux d'indication,

la détermination pour chaque vecteur de profile de celle des séquences d'éléments de données d'image, dont les signaux d'indication sont utilisés pour construire ledit vecteur de profil, qui représente le balayage d'une partie d'une barre et de cell desdites séquences qui représente le balayage d'une espace entre des barres adjacentes et

le transfert sélectif vers lesdits moyens de reconnaissance uniquement des séquences d'éléments de données d'image qui représentent le balayage d'une partie d'une barre et le rejet de toutes les autres séquences.

9. Procédé selon la revendication 8, caractérisé en ce que chacun desdits signaux d'indication a une valeur binaire.

10. Procédé selon la revendication 8 ou la revendication 9, caractérisé en ce que ladite opération de comparaison comporte

un premier test de discrimination pour déterminer si une séquence comporte principalement des éléments d'un premier état;

un deuxième test de discrimination pour déterminer si une séquence comporte principalement des éléments d'un deuxième état; et

un troisième test de discrimination pour déterminer si une séquence ne satisfaisant pas audit premier ou audit deuxième test de discrimination comporte principalement des éléments dudit premire ou dudit deuxième état.

11. Procédé selon la revendication 10, caractérisé en ce que

ledit troisième test de discrimination comporte la comparaison du décompte des éléments de chaque séquence d'éléments avec le décompte des éléments d'une séquence d'éléments précédente.

12. Procédé selon l'une quelconque des précédentes revendications 8, 9, 10 ou 11, caractérisé en ce que ladite opération de détermination comporte

la mémorisation d'une pluralité de vecteurs de profils ainsi qui de décisions en relation avec chaque vecteur de profile mémorisé,

la comparaison de chaque vecteur de profil construit avec lesdits vecteurs de profils mémorisés afin de déterminer pour chaque vecteur de profil construit un vecteur de profil mémorisé correspondant, et

l'utilisation des décisions en relation avec le vecteur de profil mémorisé correspondant pour déterminer laquelle des séquences d'éléments de données d'image, dont les signaux d'indication sont utilisés pour construire ledit vecteur de profile, représente le balayage d'une partie d'une barre et quelles séquences représentent le balayage d'un espace entre des barres adjacentes.

FIG.1

FIG.2

FIG.7

SEQUENCES
OF ELEMENTS
OF IMAGE
DATA

SCAN LINE
NUMBER

FIG. 3

FIG. 4

SCAN LINE ELEMENT COUNTS

FIG. 5

A — B — C — D — E — F — ...

PROFILE VECTORS

SEQUENCES
OF ELEMENTS
OF IMAGE DATA
PASSED TO
RECOGNITION
MEANS

SEQUENCE SKIPPED

SKIP 4    SKIP 3    SKIP 3    SKIP 2    SKIP 3    SKIP 2

FIG. 6